(19) Europäisches Patentamt
European Patent Office
Office européen des brevets

(11) **EP 4 229 618 B1**

(12) **FASCICULE DE BREVET EUROPEEN**

(45) Date de publication et mention de la délivrance du brevet:
**27.08.2025   Bulletin 2025/35**

(21) Numéro de dépôt: **21783432.4**

(22) Date de dépôt: **23.09.2021**

(51) Classification Internationale des Brevets (IPC):
**G08G 1/09** *(2006.01)*

(52) Classification Coopérative des Brevets (CPC):
**G08G 1/09675; B60W 40/04; G08G 1/005; G08G 1/096775; G08G 1/096783; G08G 1/096791; G08G 1/163; H04L 65/80; H04L 67/12; H04W 4/40;** B60W 2552/10; B60W 2556/45; G08G 1/096708; G08G 1/096716; H04L 67/52

(86) Numéro de dépôt international:
**PCT/EP2021/076227**

(87) Numéro de publication internationale:
**WO 2022/078729 (21.04.2022 Gazette 2022/16)**

(54) **PROCEDE DE SELECTION D'INFORMATIONS A TRANSMETTRE A UN SYSTEME EMBARQUE D'UN VEHICULE ET DISPOSITIF ASSOCIE**

VERFAHREN ZUR AUSWAHL VON INFORMATIONSELEMENTEN ZUR ÜBERTRAGUNG AN EIN BORDSYSTEM EINES FAHRZEUGS UND ZUGEHÖRIGE VORRICHTUNG

METHOD FOR SELECTING INFORMATION ITEMS TO BE TRANSMITTED TO AN ON-BOARD SYSTEM OF A VEHICLE AND ASSOCIATED DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:   **16.10.2020   FR 2010596**

(43) Date de publication de la demande:
**23.08.2023   Bulletin 2023/34**

(73) Titulaire: **Ampere SAS**
**92100 Boulogne-Billancourt (FR)**

(72) Inventeurs:
• **AUBE, Colin**
**06600 Antibes (FR)**
• **BONDIER, Cédric**
**06130 Grasse (FR)**
• **PERRAUD, Eric**
**31830 Plaisance du Touch (FR)**
• **SESIA, Stéfania**
**06330 Roquefort les pins (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**EP-A1- 3 428 028          EP-A1- 3 457 383**
**EP-B1- 3 428 028          US-A1- 2006 061 486**
**US-A1- 2019 077 402**

**Description**

DOMAINE TECHNIQUE DE L'INVENTION

La présente invention concerne de manière générale les systèmes de communication d'un véhicule automobile avec l'extérieur. Elle concerne plus spécifiquement ici la sélection d'informations parmi une pluralité d'informations reçues à un instant t de la part d'émetteurs situés à distance du véhicule, en vue de la transmission des informations sélectionnées à au moins un système d'assistance à la conduite embarqué dans le véhicule.

L'invention concerne plus particulièrement un procédé de sélection d'informations et un dispositif de sélection d'informations.

L'invention trouve une application particulièrement avantageuse dans la sélection des informations reçues par un véhicule dans le cadre de la technologie communément appelée « V2X » qui englobe les technologies dans lesquelles les émetteurs communiquant avec le véhicule sont d'autres véhicules (V2V), dans lesquelles les émetteurs communiquant avec le véhicule sont des infrastructures routières (V21), dans lesquelles les émetteurs communiquant avec le véhicule sont des émetteurs du réseau (V2N) et dans lesquelles les émetteurs communiquant avec le véhicule sont des piétons (V2P).

ETAT DE LA TECHNIQUE

De nombreux véhicules sont aujourd'hui équipés de systèmes d'assistance à la conduite embarqués, qui permettent d'assister le conducteur lors de sa conduite, que ce soit lors de situations de conduite dangereuses ou simplement pour améliorer le confort de conduite. On connaît par exemple les systèmes embarqués suivants : le système de navigation qui aide le conducteur à suivre un itinéraire pour se rendre d'un point A à un point B, le système d'aide à la conduite dit « ADAS » (acronyme anglais pour « Advanced Driver Assistance Système »), ou encore le tableau de bord qui affiche des alertes lors de la conduite. Pour fonctionner efficacement, les systèmes embarqués doivent sonder et analyser l'environnement plus ou moins lointain du véhicule. A cet effet, le véhicule est équipé de capteurs physiques qui récoltent des informations sur ce qui entoure ledit véhicule. Pour améliorer encore la connaissance de son environnement, le véhicule peut aussi être équipé de la technologie V2X grâce à laquelle il reçoit des messages en provenance d'émetteurs situés à distance de lui, par exemple de la part d'autres véhicules (V2V), d'infrastructures routières (V21), du réseau (V2N) ou encore d'autres usagers de la route tels que les piétons (V2P). Les messages reçus de la part de ces émetteurs contiennent des informations diverses telles que : la position absolue (en coordonnées GPS) de l'émetteur, la fiabilité de cette position, la vitesse de déplacement de l'émetteur, l'accélération de l'émetteur et/ou sa direction de déplacement, ou encore les dangers que l'émetteur a rencontrés ou créés lors de son déplacement (route glissante, virage dangereux, accident, encombrement du trafic...). On estime ainsi qu'avec le déploiement de la technologie V2X dans de plus en plus de véhicules, la quantité d'informations qui viendra à être reçue par seconde dans un véhicule sera telle qu'il deviendra nécessaire de sélectionner les informations reçues pour ne transmettre à chaque système embarqué que celles qui lui sont utiles, au risque, sinon, de le saturer et de ralentir son fonctionnement.

Le document EP 3428028 A1 décrive une méthode permettant de sélectionner en priorité les données V2X qui sont susceptibles d'apporter des informations sur une région qui intéresse le véhicule.

PRÉSENTATION DE L'INVENTION

Dans ce contexte, la présente invention propose un procédé de sélection d'informations, selon la revendication 1, qui permet d'éliminer ou de rendre non prioritaires les informations les moins utiles au système embarqué, afin d'alléger le traitement des informations par ce système embarqué et d'éviter de ralentir son fonctionnement. Plus particulièrement, on propose selon l'invention un procédé tel que défini dans l'introduction, dans lequel il est prévu de :

> a) estimer la position de chaque information reçue dans une cartographie de voies de circulation en fonction de la position absolue de ladite information reçue à l'instant t,
> b) déterminer au moins un lieu d'intérêt dans lequel doivent être positionnées les informations que ledit au moins un système embarqué souhaite se voir transmises en priorité,
> c) sélectionner, parmi les informations reçues, celles à transmettre au système embarqué, en fonction de leur position estimée dans la cartographie établie à l'étape a) et du lieu d'intérêt renseigné à l'étape b).

On entend par voie de circulation tout type de routes ou chemins susceptibles d'être emprunté par un véhicule motorisé ou non, ou par un piéton.

Ainsi, grâce à l'invention, les informations situées à l'extérieur du lieu d'intérêt ne sont pas transmises au système embarqué, ou sont considérées par ce système comme non prioritaires. Cela permet de réduire la quantité d'informations à traiter par le système embarqué, et de ne conserver que les informations les plus pertinentes.

D'autres caractéristiques avantageuses et non limitatives du procédé conforme à l'invention, prises individuellement ou selon toutes les combinaisons techniquement possibles, sont les suivantes :

- à l'étape a), la position de chaque information reçue à l'instant t est estimée dans la cartographie à l'aide d'une procédure de localisation choisie parmi une procédure simplifiée à exécution rapide ou une procédure complexe à exécution plus lente, la procédure de localisation étant choisie en fonction d'une valeur de densité du réseau de voies de circulation le long d'un itinéraire de référence du véhicule;
- le choix de la procédure de localisation est en outre opéré en fonction de l'erreur statistique associée à la position absolue de l'information reçue à l'instant t. ;
- la procédure de localisation simplifiée comprend une projection orthogonale de la position absolue de l'information reçue dans chaque voie de circulation, et la sélection de la projection orthogonale la plus courte pour estimer la position de l'information reçue dans la cartographie ;
- la procédure de localisation complexe détermine la voie de circulation sur laquelle il convient de projeter la position absolue de l'information reçue à l'instant t, à partir, d'une part, d'une zone de la cartographie plus ou moins étendue, et, d'autre part, d'un nombre plus ou moins grand de positions passées adoptées par l'information reçue aux instants précédant l'instant t ;
- la procédure de localisation complexe comporte une étape de paramétrage au cours de laquelle sont paramétrés la taille de la zone de la cartographie et le nombre de positions passées à considérer, en fonction de l'erreur statistique associée à la position absolue de l'information reçue à l'instant t ;
- la procédure de localisation complexe comporte en outre une étape d'initialisation, au cours de laquelle il est choisi, pour chacune des positions passées adoptées à un des instants précédant l'instant t, si ladite position à considérer est la position absolue ou la position estimée dans la cartographie de l'information reçue audit instant précédant l'instant t, le choix étant opéré en fonction de la fiabilité associée à la position estimée ;
- à l'étape b), le lieu d'intérêt est délimité par un filtre spatial qui indique les portions de voies de circulation à considérer en fonction, d'une part, de la position du véhicule à un instant t, et, d'autre part, d'un itinéraire de référence du véhicule à l'instant t ;
- le filtre spatial comporte une liste de segments de voies de circulation. ;
- le filtre spatial comporte :

une position de référence dans la cartographie,
une distance maximale dans l'itinéraire de référence du véhicule, mesurée à partir de la position de référence,
le degré des voies de circulations adjacentes à considérer, et,
éventuellement, une distance maximale, dans les voies de circulations adjacentes, mesurée à partir de la position de référence. L'invention propose également un dispositif de sélection d'informations, selon la revendication 10, parmi une pluralité d'informations reçues à un instant t de la part d'émetteurs situés à distance d'un véhicule, en vue de la transmission des informations sélectionnées à un système d'assistance à la conduite embarqué dans le véhicule, comportant :

- une unité de mémoire adaptée à stocker une cartographie des voies de circulation, au moins un lieu d'intérêt dans lequel doivent être positionnées les informations à transmettre en priorité au système embarqué, ainsi que la position absolue de l'information reçue à l'instant t,
- une unité de commande adaptée à estimer la position de chaque information reçue dans la cartographie et à sélectionner les informations reçues à transmettre en priorité au système embarqué en fonction de la position estimée desdites informations reçues dans la cartographie et du lieu d'intérêt stocké dans l'unité de mémoire.

## DESCRIPTION DÉTAILLÉE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :

La figure 1 est un schéma de principe d'un dispositif selon l'invention ;
La figure 2 est un diagramme des étapes principales d'un procédé selon l'invention ;
La figure 3 est un diagramme des sous-étapes incluses dans l'étape a) du procédé selon l'invention ; et,
La figure 4 est une représentation schématique d'un exemple de cartographie sur laquelle sont représentées l'ensemble des informations reçues à un instant t, à savoir les informations sélectionnées qui seront transmises au système embarqué et les informations non sélectionnées qui ne seront pas transmises au système embarqué.

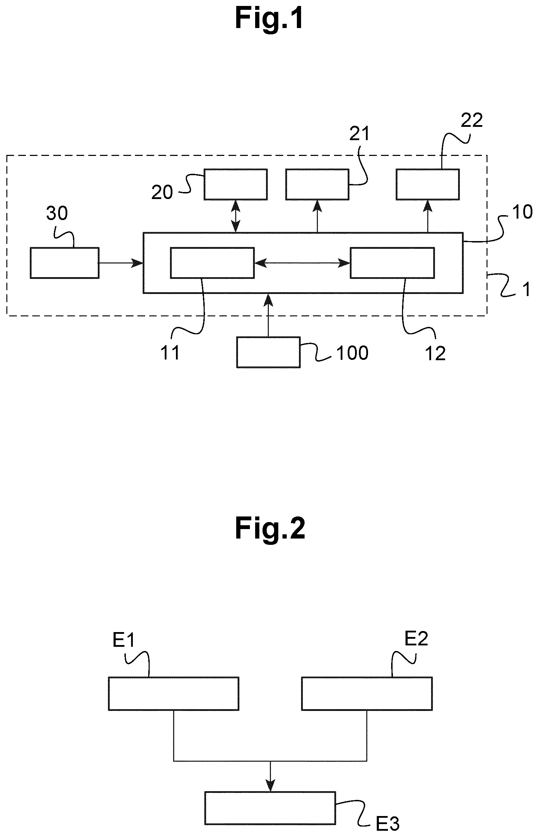

Sur la figure 1, on a représenté un dispositif 10 de sélection d'informations parmi une pluralité d'informations reçues à un instant t de la part d'émetteurs 100 situés à distance d'un véhicule 1, en vue de la transmission des informations sélectionnées à au moins un système d'assistance à la conduite embarqué dans le véhicule 1. Par soucis de simplification, le système d'assistance à la conduite embarqué dans le véhicule sera dénommé dans la suite de la description « système embarqué 20, 21, 22 ».

On considère que le véhicule 1 est destiné à emprunter un réseau routier formé de voies de circulation, et que les émetteurs 100 sont des acteurs de ce réseau routier, par exemple, d'autres véhicules, des infrastructures routières, ou encore des usagers du réseau tels que des piétons. Le véhicule 1 et les émetteurs 100 sont tous dotés de la technologie dite « V2X » grâce à laquelle ils peuvent émettre et recevoir des messages contenant des informations. Les voies de circulation sont par exemple les routes départementales, régionales, nationales, autoroutes, ainsi que les chemins piétons, les pistes cyclables.

Les informations reçues sont par exemple les informations suivantes : la position absolue (en coordonnées GPS) de l'émetteur, la fiabilité de cette position, la vitesse de déplacement de l'émetteur, l'accélération de l'émetteur et/ou sa direction de déplacement, ou encore les dangers que l'émetteur a rencontrés ou créés lors de son déplacement (route glissante, virage dangereux, accident, encombrement du trafic...).

Ici, le véhicule 1 comporte en tant que systèmes embarqués, un système de navigation 20 qui aide le conducteur à suivre un itinéraire pour se rendre d'un point A à un point B, un système d'aide à la conduite 21 dit « ADAS » (acronyme anglais pour « Advanced Driver Assistance Système »), et un tableau de bord 22 qui affiche des alertes lors de la conduite.

Le dispositif 10 est adapté à communiquer avec chacun des systèmes embarqués 20, 21, 22 au moyen d'une communication filaire ou sans fil, de préférence au moyen d'une communication filaire.

Chaque système embarqué 20, 21, 22 a besoin d'informations spécifiques pour fonctionner avec précision. Cependant, il n'a pas nécessairement besoin de toutes les informations reçues à l'instant t de la part de tous les émetteurs 100. Ainsi, les systèmes embarqués 20, 21, 22, indiquent au véhicule 1 les informations qu'ils souhaitent se voir transmises, que se soit en termes de nature d'information, de nature de l'émetteur ou, ce qui est l'objet de l'invention, en termes de position de l'information vis-à-vis du véhicule 1.

Le dispositif 10 selon l'invention est un filtre intermédiaire entre les émetteurs 100 et les systèmes embarqués 20, 21, 22, adapté à trier spatialement les informations reçues de la part des émetteurs 100 pour ne transmettre à chaque système embarqué 20, 21, 22 que les seules informations spatiales qu'il souhaite se voir transmises.

Par exemple, le système de navigation 20 est généralement intéressé par les informations relativement lointaines du véhicule 1, tandis que les informations situées très proches du véhicule l'intéressent moins. Par exemple, la présence d'un bouchon à environ 30km devant le véhicule 1 intéresse le système de navigation 20. Le tableau de bord 22 préfère quant à lui utiliser les informations très proches du véhicule 1, tandis que les informations très lointaines lui sont peu utiles. Par exemple les informations situées à quelques dizaines ou jusqu'à quelques centaines de mètres du véhicule 1 intéressent le tableau de bord 22, mais pas vraiment les informations situées plus loin. Le système d'aide à la conduite « ADAS » 21 utilise à la fois des informations très proches du véhicule et celles situées à une distance intermédiaire du véhicule, mais pas les informations situées relativement loin du véhicule 1. Par exemple, le système ADAS 21 utilise les informations situées jusqu'à quelques kilomètres de lui, mais pas plus loin. Pour avoir un ordre de grandeur, on considère dans un environnement urbain ou périurbain qu'une information est proche du véhicule lorsqu'elle est située entre 0 et 150 à 200 mètres du véhicule, c'est-à-dire dans le champ de visibilité des capteurs 30 classiques du véhicule, qu'elle est intermédiaire lorsqu'elle est comprise entre 200 mètres et 1 à 2 kilomètres du véhicule, et lointaine lorsqu'elle est située à plus de 2 kilomètres. Il faut bien comprendre que ces ordres de grandeur de distance dépendent de la topologie de la route et de la vitesse du véhicule. Lorsque le véhicule roule sur autoroute à 130 km, ces ordres de grandeur doivent être agrandis. Quoiqu'il en soit, ces ordres de grandeur ne doivent pas être considérés comme limitatifs dans le cadre de l'invention.

La réception, par le véhicule 1, et notamment par le dispositif 10, des informations émises par les émetteurs 100, est réalisée par communication sans fil plus ou moins longue distance, par exemple via les ondes radio.

Comme le montre la figure 1, le dispositif 10 selon l'invention comporte :

- une unité de mémoire 11 adaptée à stocker une cartographie de voies de circulation, au moins un lieu d'intérêt dans lequel doivent être positionnées les informations à transmettre au système embarqué 20, 21, 22, ainsi que la position absolue $Z_i$ de la i-ème information reçue à l'instant t, et

- une unité de commande 12 adaptée à estimer la position de chaque information reçue de la part des émetteurs 100 sur la cartographie et à sélectionner les informations à transmettre au système embarqué 20, 21, 22 en fonction de la position estimée $X_i$ desdites informations dans la cartographie, et du lieu d'intérêt stocké dans l'unité de mémoire 11.

Comme le montre la figure 1, l'unité de mémoire 11 est adaptée à communiquer avec l'unité de commande 12. Cette communication est une communication filaire, ou une communication sans fil. De préférence, l'unité de mémoire 11 et l'unité de commande 12 sont embarquées dans le véhicule 1, et communiquent par communication filaire.

L'unité de commande 12 comporte au moins un calculateur adapté à mettre en œuvre des calculs.

Comme le montre la figure 1, le dispositif 10 selon l'invention est en outre adapté à communiquer avec au moins un capteur 30 du véhicule pour récupérer certaines informations concernant directement le véhicule 1, et notamment ce qui sera appelé par la suite le scénario de conduite du véhicule.

Par exemple, le dispositif 10 est ici adapté à communiquer avec le capteur GPS du véhicule qui fournit la position absolue du véhicule 1, ou encore le capteur de vitesse qui donne la vitesse du véhicule 1. Par exemple encore, le dispositif 10 est aussi adapté à communiquer le système de navigation 20 embarqué (le système de navigation 20 étant alors considéré comme un capteur) qui donne un itinéraire de référence du véhicule, c'est-à-dire un itinéraire réel emprunté par le véhicule 1 à l'instant t ou un itinéraire le plus probable qu'est susceptible d'emprunter le véhicule 1 à l'instant t. La manière dont le système de navigation 20 détermine l'itinéraire le plus probable ne fait pas partie de l'invention et ne sera pas détaillée. Lorsque le système de navigation 20 n'est pas allumé, le dispositif 10 est par exemple adapté à communiquer avec un calculateur (en tant que capteur) qui est adapté à calculer l'itinéraire de référence du véhicule sous la forme de l'itinéraire le plus probable qu'est susceptible d'emprunter le véhicule 1 à l'instant t. L'itinéraire le plus probable qu'est susceptible d'emprunter le véhicule 1 est dans ce cas défini d'une façon statistique et recalculé toutes les fois que le véhicule est utilisé. La manière dont le calculateur calcule cet itinéraire est connue en soi et ne fait pas partie de l'invention.

Par ailleurs, le dispositif 10 est adapté à mettre en œuvre un procédé selon l'invention dont les étapes principales sont représentées sur le diagramme de la figure 2.

Plus précisément, le dispositif 10, est adapté à mettre en œuvre un procédé de sélection d'informations parmi une pluralité d'informations reçues, à un instant t, de la part des émetteurs 100 situés à distance du véhicule 1, en vue de la transmission des informations sélectionnées à au moins un des systèmes embarqués 20, selon lequel il est prévu de :

a) estimer la position $X_i$ de chaque information reçue dans la cartographie de voies de circulation enregistrée dans l'unité de mémoire 11, en fonction de la position absolue $Z_i$ de ladite information reçue à l'instant t (bloc E1 de la figure 2),

b) déterminer au moins un lieu d'intérêt dans lequel doivent être positionnées les informations que ledit au moins un système embarqué 20, 21, 22 souhaite se voir transmises (bloc E2 de la figure 2), et

c) sélectionner, parmi les informations reçues, celles à transmettre au système embarqué 20, 21, 22, en fonction de leur position estimée $X_i$ dans la cartographie établie à l'étape a) et du lieu d'intérêt renseigné à l'étape b) (bloc E3 de la figure 2).

Les étapes a), b) et c) sont plus particulièrement mises en œuvre par l'unité de commande 12 du dispositif 10.

En pratique, les étapes a) et b) peuvent être mises en œuvre indépendamment et en parallèle l'une de l'autre, tandis que l'étape c) est nécessairement mise en œuvre postérieurement auxdites étapes a) et b).

A l'étape b), l'unité de commande 12 reçoit, d'une part, de la part de chaque système embarqué 20, 21, 22, une liste de souhaits qui définissent un lieu d'intérêt, et, d'autre part, de la part des capteurs 30 du véhicule 1, des données sur le scénario de conduite du véhicule.

Le scénario de conduite inclut par exemple un ou plusieurs des paramètres suivants : la vitesse du véhicule, les conditions météorologiques extérieures, le fait que le véhicule circule en ville ou sur autoroute, l'itinéraire de référence du véhicule, la densité de circulation, la limitation de vitesse, la quantité et la nature des capteurs physiques présents dans le véhicule, la complexité du réseau de voies de circulation à l'instant t.

Le lieu d'intérêt reflète le souhait du système embarqué 20, 21, 22 de recevoir ou non certaines informations en priorité, en fonction de leur provenance spatiale.

Par exemple, le système ADAS 21 peut indiquer à l'unité de commande 12 qu'il souhaite toujours recevoir toutes les informations situées dans un rayon de 200 mètres autour du véhicule 1 si le véhicule roule à moins de 70km/h, et celles situées dans un rayon de 700 mètres autour du véhicule s'il roule au-dessus de 70km/h, étant entendu que les informations situées dans un rayon de 400 mètres sont prioritaires par rapport aux autres. Le système ADAS 21 peut ajouter d'autres conditions, par exemple qu'il souhaite obtenir toutes les informations provenant des voies adjacentes à la voie de circulation de l'itinéraire de référence emprunté par le véhicule 1, mais seulement lorsque la véhicule est en ville. Le système ADAS 21 peut encore adapter la taille du rayon du lieu d'intérêt dans lequel il souhaite recevoir des informations en fonction des conditions météorologiques. Par exemple, le système ADAS 21 peut indiquer qu'en cas de mauvaises conditions météorologiques, il souhaite augmenter le rayon du lieu d'intérêt de duquel doivent provenir les informations.

Chacun des autres systèmes embarqués 20, 22 indique ainsi ses conditions à l'unité de commande 12 du dispositif 10, de sorte que l'unité de commande 12 connaît l'ensemble des critères dont elle doit tenir compte pour établir le lieu d'intérêt duquel doit provenir une information pour pouvoir être transmise audit système embarqué 20, 21, 22.

L'unité de commande 12 détermine alors, pour chaque système embarqué 20, 21, 22, à partir du lieu d'intérêt et du scénario de conduite du véhicule 1, un filtre spatial qui délimite concrètement, dans l'espace entourant le véhicule 1, les souhaits dudit système embarqué 20, 21, 22. En pratique, le filtre spatial indique les portions de voies de circulation de la cartographie au sujet desquelles le système embarqué 20, 21, 22 souhaite recevoir des informations.

Le filtre spatial dépend d'une part, de la position du véhicule à un instant t, et, d'autre part, de l'itinéraire de référence du véhicule à l'instant t, c'est-à-dire de l'itinéraire réel ou de l'itinéraire le plus probable emprunté par le véhicule 1 à l'instant t, par exemple tel qu'il est donné par le système de navigation 20.

La position du véhicule 1 est soit la position absolue du véhicule 1, donnée en latitude, longitude et altitude, soit la position estimée du véhicule dans la cartographie, obtenue à partir de la position absolue du véhicule 1. Ici, la position absolue du véhicule 1 à l'instant t et l'itinéraire de référence du véhicule 1 sont respectivement fournis par le capteur GPS 30 et le système de navigation 20. En variante, l'itinéraire de référence du véhicule pourrait être donné par le calculateur.

Selon une première variante de réalisation, dite variante « explicite », la cartographie est définie comme un ensemble de segments de voies de circulation et de nœuds. Chaque segment, identifié par un index idx, représente une portion ou un tronçon de voie de circulation sans aucune intersection et peut présenter une taille quelconque. Chaque nœud représente une intersection entre une ou plusieurs voies de circulation. Ainsi, deux segments d'index idx distincts sont séparés par un nœud.

Selon cette première variante, le filtre spatial délimitant le lieu d'intérêt à chaque instant t comporte un sous-ensemble de segments de voies de circulation et de nœuds.

Selon une deuxième variante de réalisation, dite variante « implicite », le filtre spatial comporte :

- une position de référence dans la cartographie, qui est en général la position du véhicule 1,
- une distance maximale dans l'itinéraire de référence du véhicule 1, mesurée à partir de la position de référence,
- le degré des voies de circulations adjacentes à considérer, et,
- éventuellement une distance maximale, dans les voies de circulations adjacentes, mesurée à partir de la position de référence.

On considère que les voies de circulation adjacentes à l'itinéraire de référence sont celles qui interceptent cet itinéraire de référence, directement ou indirectement. Une voie de circulation adjacente de premier degré correspond à une voie de circulation qui recoupe directement l'itinéraire de référence, tandis qu'une voie de circulation adjacente de deuxième degré est une voie de circulation qui recoupe une voie de circulation adjacente du premier degré. Autrement dit, toutes les voies de circulation qui partent de l'itinéraire de référence, sont des voies de circulation adjacente de premier degré; et toutes les voies de circulation qui partent d'une voie de circulation adjacente de premier degré sont des voies de circulation adjacentes de deuxième degré.

A partir de ces informations implicites, l'unité de commande 12 sait quels tronçons de voie de circulation intéressent le système embarqué 20, 21, 22.

Quelle que soit la variante envisagée, le filtre spatial évolue au cours du temps, d'une part parce que le scénario de conduite évolue, et, d'autre part, parce que le véhicule 1 se déplace.

Ainsi, l'unité de commande 12 vérifie à haute périodicité si le filtre spatial est adéquat compte tenu du scénario de conduite du véhicule et de la position du véhicule 1.

De préférence, l'unité de commande 12 détermine à l'étape b), non pas un unique filtre spatial, mais un ensemble F de filtres spatiaux qui correspondent au scénario de conduite du véhicule 1 sur l'ensemble du trajet du véhicule, chaque filtre spatial étant associé à une partie de l'itinéraire de référence du véhicule 1.

Il est aussi prévu que l'unité de mémoire 11 ait en mémoire une pluralité d'ensembles Fx de filtres spatiaux, chaque ensemble Fx correspondant à certains trajets récurrents du véhicule, ou à certaines heures de la journée par exemple.

Cela facilite la détermination du filtre spatial par l'unité de commande 12 à l'instant t puisque l'unité de commande 12 choisit alors le filtre spatial correspondant à une partie du trajet du véhicule parmi l'ensemble Fx des filtres spatiaux en mémoire, associé au trajet global emprunté par le véhicule 1.

L'unité de commande 12 vérifie aussi si l'ensemble F de filtres spatiaux associé à l'ensemble du trajet est adéquat ou s'il faut en changer. Cette vérification est par exemple effectuée à haute périodicité ou seulement en cas de modification du trajet du véhicule par rapport à l'itinéraire de référence.

Chaque ensemble de filtres spatiaux est enregistré et mis à jour dans l'unité de mémoire 11 en se basant sur l'historique des trajets du véhicule, et/ou sur une méthode d'apprentissage qui tient notamment compte de la vraisemblance de chaque filtre spatial.

A l'issue de l'étape b), l'unité de commande 12 connaît donc, sous forme d'un filtre spatial ou d'un ensemble de filtres spatiaux, les endroits géographiques d'où doivent provenir les informations que va traiter chaque système embarqué.

L'étape a) consiste quant à elle en une localisation de l'information reçue à l'instant t par le véhicule 1, cette localisation s'effectuant globalement en deux temps :

- il faut d'abord sélectionner, parmi une pluralité de tronçons de voies de circulation possibles, le meilleur candidat, c'est-à-dire le tronçon de voie de circulation le plus vraisemblable d'où est susceptible de provenir l'information reçue, puis,

- une fois le meilleur candidat trouvé parmi les tronçons de voies de circulation possibles, il faut projeter la position absolue Zi de l'information reçue sur ce tronçon de voie de circulation, pour connaître la position estimée Xi de l'information dans la cartographie.

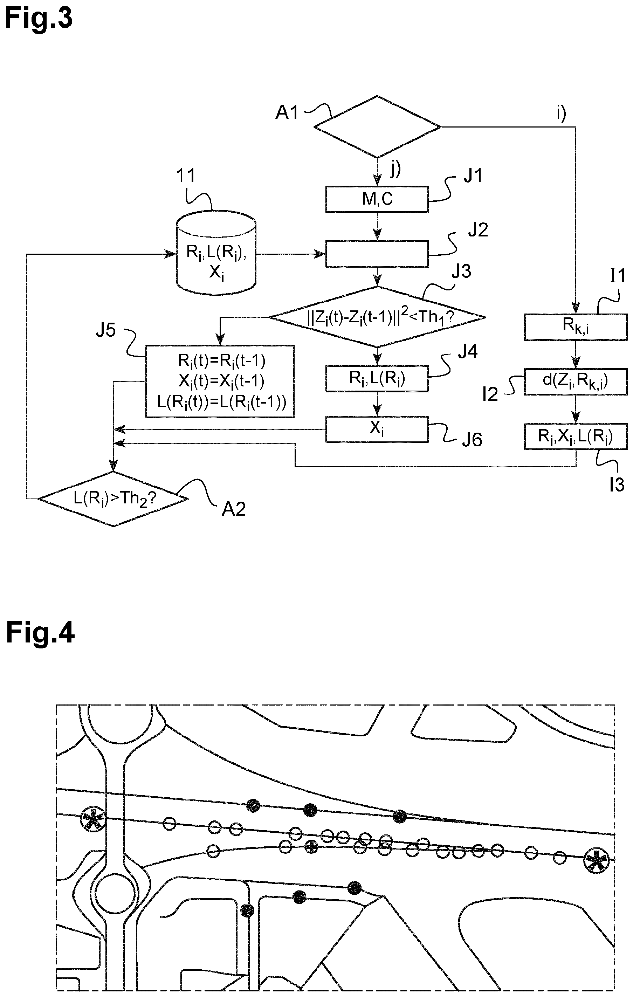

L'étape a) du procédé selon l'invention est explicitée plus en détails sur la figure 3 qui synthétise les principales sous-étapes qu'elle comprend.

Au cours d'une première sous-étape de sélection, représentée par le bloc A1 de la figure 3, il est prévu de :

- choisir la procédure de localisation qui sera mise en œuvre par l'unité de commande 12 pour sélectionner le meilleur candidat parmi les tronçons de voies de circulation possibles, puis de
- localiser l'information reçue à l'instant t sur ce tronçon de voie de circulation.

Plus précisément, pour chaque information reçue à l'instant t, l'unité de commande 12 choisit la procédure de localisation à mettre en œuvre parmi une procédure de localisation simplifiée à exécution rapide (voie i sur la figure 3) ou une procédure de localisation complexe à exécution plus lente (voie j sur la figure 3). Le choix est opéré en fonction d'une valeur de densité du réseau de voies de circulation le long de l'itinéraire de référence emprunté par le véhicule 1.

La valeur de densité du réseau des voies de circulation (ou réseau routier) correspond ici à la longueur totale des voies de circulation dans une surface choisie. Cette valeur de densité est donnée en TR/m$^2$. La valeur de densité est évaluée dans une surface plus ou moins vaste, en fonction du scénario de conduite. La valeur de densité est par exemple évaluée à partir de la cartographie et/ou à partir du nombre d'intersections (nœuds) entre différents tronçons de voies de circulation dans la surface choisie de la cartographie. Cette valeur de densité donne une indication sur la complexité du réseau routier. Une valeur faible, correspond à un réseau routier peu complexe, par exemple à une zone rurale, tandis qu'une valeur élevée correspond à un réseau routier complexe, par exemple à une zone de centre ville. Plus le réseau routier est complexe, plus l'information sera difficile à localiser a priori, dans la mesure où l'information est susceptible de provenir d'un grand nombre de tronçons de voies de circulation distincts, proches les uns des autres.

Par conséquent, lorsque la valeur de densité est supérieure à une valeur seuil maximale prédéterminée, l'unité de commande 12 est programmée pour choisir la procédure de localisation dite complexe (voie j de la figure 3). Cette procédure, plus lourde en termes de calcul et par conséquent plus lente, est privilégiée pour maximiser la précision et la fiabilité de la localisation lorsque de nombreux tronçons de voies de circulation sont candidats. Au contraire, lorsque la valeur de densité est inférieure à une valeur seuil minimale prédéterminée, l'unité de commande 12 est programmée pour choisir la procédure de localisation dite simplifiée (voie i sur la figure 3). La procédure simplifiée est moins lourde en termes de calcul et son exécution est donc plus rapide.

Le choix de la procédure de localisation est en outre opéré en fonction d'une erreur statistique associée à la position absolue Zi de l'information reçue à l'instant t.

En particulier, lorsque la valeur de densité est comprise entre lesdites valeurs seuils minimale et maximale, l'unité de commande 12 fait appel à un anneau de confiance associé à la position absolue Zi pour choisir laquelle des procédures de localisation simplifiée ou complexe doit être mise en œuvre.

En pratique, chaque information reçue est associée à une position absolue Zi, fournie par le GPS de l'émetteur 100 ayant émis l'information. Cette position absolue Zi est donnée en termes de latitude, longitude et altitude. L'émetteur 100 de l'information reçue donne la position absolue Zi avec une fiabilité plus ou moins grande. Ainsi, la position absolue Zi est associée à un anneau de confiance, généralement sous forme d'ellipse, qui représente la variance de l'erreur. Plus l'anneau de confiance est grand, moins grande est la fiabilité de la position absolue Zi, donc plus l'erreur statistique associée à ladite position absolue Zi est grande. Au contraire, plus l'anneau de confiance est petit, plus grande est la fiabilité de la position absolue Zi et donc plus l'erreur statistique associée à la position absolue Zi est petite.

Lorsque la valeur de densité est comprise entre lesdites valeurs seuils minimale et maximale, l'unité de commande 12 compare l'erreur statistique associée à la position absolue Zi avec une valeur d'erreur minimale prédéterminée. Lorsque l'erreur statistique associée à la position absolue Zi est inférieure à ladite valeur d'erreur minimale, l'unité de commande 12 opte pour la procédure de localisation simplifiée (voie i sur la figure 3). Au contraire, lorsque l'erreur statistique associée à la position absolue Zi est supérieure à ladite valeur d'erreur minimale, l'unité de commande 12 opte pour la procédure de localisation complexe (voie j sur la figure 3). On considère ici que l'erreur statistique associée à la position absolue Zi de la i-ème information dépend de l'anneau de confiance décrit précédemment. Par exemple l'erreur statistique est la variance de l'ensemble des positions incluses dans l'anneau de confiance, ou encore l'écart-type de l'ensemble des positions incluses dans l'anneau de confiance.

En pratique, la procédure de localisation dite complexe est particulièrement adaptée à la localisation des informations dynamiques, c'est-à-dire à la localisation des informations qui bougent dans le temps, tandis que la procédure de localisation dite simplifiée peut s'avérer suffisante dans le cadre d'information statiques.

Lorsque la procédure de localisation simplifiée est choisie par l'unité de commande 12, la voie i de la figure 3 est mise en œuvre.

La procédure de localisation simplifiée comprend une première étape (bloc I1 de la figure 3) de récupération de données, au cours de laquelle l'unité de commande 12 récupère, dans l'unité de mémoire 11 tous les tronçons de voies de circulation possibles d'où l'information est susceptible d'avoir été émise.

En pratique, lors de la première étape (bloc 11), l'unité de commande 12 détermine la zone de recherche dans laquelle elle va chercher à localiser l'information. Selon une première variante, l'unité de commande 12 récupère alors dans l'unité de mémoire 11 tous les tronçons de voie de circulation compris dans l'ensemble F de filtres spatiaux utilisés, à l'instant t, lors de l'étape b) du procédé, et sélectionne, parmi ces tronçons de voies de circulation de la cartographie, les k tronçons référencées Rk,i, qui sont pertinents par rapport à la position absolue Zi de l'information reçue, notamment ceux situées aux alentours de la position absolue Zi.

Selon une deuxième variante de la première étape (bloc 11), l'unité de commande 12 récupère tous les tronçons de voie de circulation Rk,i compris dans les filtres spatiaux de l'ensemble F de filtre spatiaux utilisés à l'étape b). Selon cette deuxième variante, la zone de recherche comprend alors tous les tronçons Rk,i de voie de circulation du trajet de véhicule.

Quelle que soit la variante envisagée pour la mise en œuvre de la première étape (bloc 11), le tronçon de voie de circulation Rk,i est défini mathématiquement comme un segment, décrit par une équation linéaire avec les coefficients -a/b and -c/b.

Les points de départ Sk,i et de fin Ek,i du segment Rk,i sont décrits comme $(Sk,i ; Ek,i) \in Rk,i$.

La procédure de localisation simplifiée comprend ensuite une étape de projection orthogonale (bloc I2 de la figure 3) au cours de laquelle l'unité de commande 12 effectue une opération de projection orthogonale de la position absolue Zi de l'information reçue dans chaque tronçon de voie de circulation Rk,i récupéré à l'étape précédente (11).

L'unité de commande 12 calcule ensuite la distance d(Zi, Rk,i) entre la position absolue Zi et sa projection orthogonale sur la voie de circulation Rk,i, en mettant en œuvre le calcul suivant.

[Math. 1]

$$d\left(Z_i, R_{k,i}\right) = \frac{(a + b + c)}{\sqrt{(a^2 + b^2}}$$

Le point d'intersection entre le segment Rk,i et la projection orthogonale de la position absolue Zi est trouvée de manière directe selon une forme fermée. Le point d'intersection est appelé $I_{k, i}$.

T est la distance maximale acceptable entre la position absolue Zi et sa projection orthogonale pour que le tronçon de voie de circulation soit considéré comme un candidat à retenir. Autrement dit, le tronçon de voie de circulation Rk,i est considéré comme un candidat possible, si et seulement si l'équation suivante est vérifiée.

[Math. 2]

$$f\left(Z_i, R_{k,i}\right) = d\left(Z_i, R_{k,i}\right) < T \ \ ET \ \ I_{k,i} \ \in \left(S_{k,i} ; E_{k,i}\right) \forall k, i$$

La procédure de localisation simplifiée comprend enfin une étape de conclusion (bloc I3 de la figure 3), au cours de laquelle l'unité de commande 12 sélectionne le meilleur candidat parmi les tronçons de voie de circulation retenus. En pratique, le meilleur candidat est celui qui correspond à la projection orthogonale la plus courte pour positionner l'information reçue sur un des tronçons de voie de circulation de la cartographie.

Pour sélectionner le meilleur candidat de tronçon de voie de circulation Ri d'où provient l'information qui a pour position absolue Zi, l'unité de commande 12 met en œuvre le calcul suivant.

[Math. 3]

$$R_i = argmin\left\{R_{k,i} \in F\right\} avec \ f\left(Z_i, R_{k,i}\right) < T$$

La position estimée Xi de l'information dans la cartographie sera alors considérée comme le point d'intersection Ik,i obtenu entre le tronçon de voie de circulation Ri et la projection orthogonale de la position absolue Zi sur ce tronçon Ri. Autrement dit, la position estimée Xi de l'information dans la cartographie est le résultat de la projection orthogonale la plus courte sur les tronçons de voies de circulation environnant la position absolue Zi.

L'unité de commande 12 sait alors, avec une fiabilité L(Ri), de quel tronçon de voie de circulation Ri provient l'information reçue, et de quelle position estimée Xi, sur ledit tronçon de voie de circulation Ri, provient ladite information.

La fiabilité L(Ri) associée à la détermination de la voie de circulation Ri d'où provient l'information est calculée de manière connue en soi. Par exemple, cette fiabilité L(Ri) peut être donnée par deux calculs distincts. Selon le premier calcul, pour chaque candidat de tronçons de voie de circulation Ri,k,,j la fiabilité L(Ri,k,,j) est le ratio entre la probabilité a posteriori que la position estimée Xi soit sur le tronçon Ri,k,j étant donné que la position absolue est Zi et le maximum de toutes les autres probabilités calculées pour tous les autres candidats de tronçons de voie de circulation Ri,k,m avec m différent de j. Selon le deuxième calcul, pour chaque candidat de voie de circulation Ri,k,j, la fiabilité L(Ri,k,j) est le ratio entre la probabilité a posteriori que la position estimée Xi soit sur le tronçon Ri,k,j étant donné que la position absolue était Zi et la moyenne de toutes les autres probabilités calculées pour tous les autres candidats de tronçons de voie s de circulation Ri,k,m avec m différent de j.

Dans une dernière étape du procédé de localisation simplifiée, représentée par le bloc A2 de la figure 3, la fiabilité L(Ri) associée à la détermination de la voie de circulation d'où provient l'information est comparée à une valeur seuil de fiabilité prédéterminée Th2. La valeur seuil de fiabilité prédéterminée Th2 est supérieure ou égale à 0, ce qui garantit qu'un des meilleurs candidats de tronçons de voie de circulation est en train d'être choisi. La valeur seuil de fiabilité prédéterminée Th2 dépend en pratique de la taille de l'anneau de confiance associée à la position absolue Zi et de la taille de la zone de recherche dans laquelle on cherche à localiser l'information.

Si la fiabilité L(Ri) est supérieure à la valeur seuil de fiabilité prédéterminée Th2, l'unité de mémoire 11 enregistre que l'information reçue à l'instant t provient de la voie de circulation Ri, avec une fiabilité L(Ri), et que l'information est plus spécifiquement localisée à la position estimée Xi de la cartographie à cet instant t. Ainsi, dans l'unité de mémoire 11, sont associés, avec l'instant t et l'information reçue, la position absolue Zi, la position estimée Xi, le tronçon de voie de circulation Ri sur lequel est situé l'émetteur 100 de l'information, et la fiabilité L(Ri).

Par convention, et à moins d'une autre indication, il faut bien comprendre que les notations Xi, Zi, Ri, L(Ri) utilisées dans le texte correspondent aux paramètres à l'instant t et sont équivalents aux notations Xi(t), Zi(t), Ri(t), L(Ri(t)).

Lorsque la procédure de localisation complexe est choisie par l'unité de commande 12, la voie j de la figure 3 est mise en œuvre. La procédure de localisation complexe utilise un algorithme connu en soi, dit algorithme des chaînes de Markov (ou modèle HMM pour « Hidden Markov Model » en anglais), mais comprend des étapes préliminaires à la mise en œuvre de cet algorithme qui permettent d'optimiser le temps de calcul sans diminuer la fiabilité du résultat, ou à tout le moins en minimisant les pertes de fiabilité.

Cet algorithme est capable de fournir le meilleur tronçon de voie de circulation sur lequel est susceptible de se trouver l'information reçue, et la probabilité que l'information se trouve effectivement sur ce tronçon. Pour trouver le meilleur tronçon, l'unité de commande 12 utilise les positions passées de l'information (et la fiabilité de ces positions) pour estimer le trajet le plus probable effectué par l'information. Pour parvenir au résultat, l'algorithme attribue une probabilité à chaque tronçon de voie de circulation candidat, et une probabilité de transition associée au passage de l'information d'un tronçon candidat à l'instant t-1 à un autre tronçon candidat à l'instant t.

Pour trouver le tronçon de voie de circulation Ri sur lequel il convient de projeter la position absolue Zi de l'information reçue à l'instant t, la procédure de localisation complexe détermine d'une part, la zone de la cartographie plus ou moins étendue dans laquelle il convient de rechercher ledit tronçon, et, d'autre part, le nombre plus ou moins grand de positions passées adoptées par l'information aux instants précédant l'instant t qu'il convient de considérer pour retracer le trajet de l'information.

Autrement dit, la procédure de localisation complexe (voie j sur la figure 3) comporte une première sous-étape de paramétrage (bloc J1 de la figure 3), au cours de laquelle l'unité de commande 12 détermine, d'une part, la zone de la cartographie dans laquelle seront compris tous les tronçons de voie de circulation candidats, et, d'autre part, le nombre de positions passées adoptées par l'information reçue aux instants précédant l'instant t qu'il conviendra d'utiliser pour déterminer le meilleur des candidats.

Ainsi, au cours de l'étape de paramétrage, l'unité de commande 12 paramètre la taille de la zone de la cartographie et le nombre de positions passées à considérer pour évaluer le meilleur candidat.

Plus la zone de la cartographie, dans laquelle on cherche le meilleur candidat parmi tous les tronçons de voies de circulation de ladite zone, est grande, plus on a de chance de trouver ce meilleur candidat, mais plus le nombre de tronçons de voie de circulation à évaluer est élevé et donc plus les temps de calculs sont allongés. En pratique, pour paramétrer la taille de la zone de recherche, l'unité de commande 12 fixe un paramètre C, qui est un facteur multiplicatif par lequel on multiplie l'anneau de confiance associé à la position absolue Zi de l'information. La zone de recherche sera ainsi égale à C fois l'anneau de confiance. Le paramètre C est au minimum choisi égal à 2.

En utilisant les positions passées adoptées par l'information, l'unité de commande 12 est capable de retracer le parcours de l'information. Grâce au calcul de corrélation du modèle HMM, l'unité de commande 12 est capable d'éliminer certains des tronçons de voies de circulation initialement candidats, car l'unité de commande 12 estime qu'il est quasiment impossible que l'information provienne de l'un de ces tronçons de voies de circulation. Plus le nombre de positions passées est grand, plus l'unité de commande 12 retrace un parcours précis, et donc plus elle augmente ses chances de trouver le meilleur candidat parmi tous les tronçons possibles. En pratique, pour paramétrer le nombre de positions passées dont l'unité de commande 12 doit tenir compte, ladite unité de commande 12 fixe un paramètre M qui correspond audit nombre de positions passées. Le paramètre M est au moins choisi égal à 2.

Le paramétrage des paramètres M et C est fonction de l'anneau de confiance associé à la position absolue Zi de l'information reçue à l'instant t. Plus précisément, l'erreur statistique découlant de l'anneau de confiance associé à la position absolue Zi est comparée à une valeur d'erreur maximale prédéterminée. Lorsque l'erreur statistique associée à la position absolue Zi est supérieure à ladite valeur d'erreur maximale, l'unité de commande 12 paramètre de préférence une large zone de recherche dans la cartographie et un grand nombre de positions passées seront appelées. Par exemple, l'unité de commande 12 fixe le paramètre C pour qu'il soit égal à 3 ou 5, et le paramètre M pour qu'il soit égal à 4, 6 ou 10. Lorsque l'erreur statistique associée à la position absolue Zi est inférieure à ladite valeur d'erreur maximale, l'unité de commande 12 paramètre de préférence une zone de recherche plus petite et un nombre plus faible de positions passées seront appelées. Par exemple, l'unité de commande 12 fixe le paramètre C pour qu'il soit égal à 2 ou 3 et le paramètre M pour qu'il soit égal à 2 ou 4. Selon une variante envisageable, les paramètres C et M peuvent aussi être décorrélés l'un de l'autre de sorte que l'unité de commande 12 peut paramétrer un grand nombre de positions passées et une petite zone de recherche, ou inversement. Le paramétrage des paramètres M et C dépend néanmoins toujours de l'anneau de confiance associé à la position absolue Zi fournie par le GPS émetteur 100 de l'information, et de la comparaison de l'erreur statistique découlant de cet anneau de confiance à la valeur d'erreur maximale prédéterminée.

La procédure de localisation complexe (voie j de la figure 3) comporte en outre une étape d'initialisation (bloc J2 de la figure 3), au cours de laquelle il est choisi, pour chacune des positions passées adoptées à un des instants précédant l'instant t, si ladite position à considérer est la position absolue Zi ou la position estimée Xi dans la cartographie de l'information reçue audit instant précédant l'instant t, le choix étant opéré en fonction de la fiabilité associée à chacune desdites positions absolue Zi ou estimée Xi.

Plus précisément, c'est la position, absolue Zi ou estimée Xi, avec la meilleure fiabilité qui est retenue comme position de l'information reçue à l'instant précédant l'instant t. Ainsi, quand la fiabilité L(Ri) associée à la position estimée Xi est proche de zéro (ou inférieure à une valeur seuil prédéterminée), la position absolue Zi est celle retenue pour la i-ème information reçue à l'instant précédant l'instant t, tandis que quand la fiabilité L(Ri) associée à la position estimée Xi est grande (supérieure à la valeur seuil prédéterminée) alors la position estimée Xi est celle retenue pour la i-ème information reçue à l'instant précédant l'instant t.

En pratique, la fiabilité associé à la position estimée Xi est calculée à la fin du procédé (bloc J4 de la figure 3), et sera détaillé ci-après.

L'étape d'initialisation (bloc J2) permet d'augmenter la rapidité d'exécution du procédé, en diminuant la complexité et le nombre de calculs, puisque les résultats obtenus aux instants précédents sont éventuellement réutilisés lorsqu'ils sont pertinents.

L'étape d'initialisation J2 est mise en œuvre postérieurement à l'étape de paramétrage J1.

Le procédé de localisation complexe comprend ensuite une étape (bloc J3 de la figure 3) qui consiste à évaluer si l'information est restée statique entre les instants t-1 et t auxquels elle a été émise.

Pour ce faire, à l'étape du bloc J3, on compare les positions absolues Zi(t) et Zi(t-1) de l'information.

Plus précisément, l'unité de commande 12 compare la distance entre lesdites positions absolues Zi(t) et Zi(t-1) avec une valeur seuil Th1. Si la distance entre lesdites positions absolues est inférieure à ladite valeur seuil Th1, alors l'unité de commande 12 considère que l'information n'a pas bougé.

En pratique, la distance entre lesdites positions absolues est calculée par :

[Math. 4]

$$\|Z_i(t) - Z_i(t-1)\|^2$$

Ce faisant, l'unité de commande 12 s'évite des calculs inutiles et récupère directement les calculs effectués à l'instant t-1.

Si l'information est considérée par l'unité de commande 12 comme n'ayant pas ou peu bougé, alors, à l'étape représentée par le bloc J5 sur la figure 3, l'unité de commande 12 détermine, que le tronçon de voie de circulation Ri(t) sur lequel est situé l'émetteur à l'instant t est identique au tronçon de circulation Ri(t-1) sur lequel est situé l'émetteur à l'instant t-1, que la fiabilité L(Ri(t)) du tronçon de voie de circulation élu comme meilleur candidat à l'instant t est égal à la fiabilité L(Ri(t-1)) du tronçon de voie de circulation élu comme meilleur candidat à l'instant t-1, et que la position estimée Xi(t) de l'information reçue à l'instant t est égale à la position estimée Xi(t-1) de l'information reçue à l'instant t-1. Cela se traduit par :

[Math. 5]

$$R_i(t) = R_i(t-1) \,; L\big(R_i(t)\big) = L\big(R_i(t-1)\big); X_i(t) = X_i(t-1)$$

Au contraire, si la distance entre lesdites positions absolues est supérieure à ladite valeur seuil Th1, alors l'unité de commande met en œuvre l'algorithme de corrélation basé sur les chaînes de Markov, aussi appelé modèle HMM (acronyme anglais pour Hidden Markov Model).

A l'étape du bloc J4, l'algorithme du modèle HMM fournit le meilleur tronçon de voie de circulation sur lequel est susceptible de se trouver l'information reçue, et la probabilité Prob(Rk,i |Z) que l'information se trouve effectivement sur ce tronçon. Comme expliqué précédemment, pour trouver le meilleur tronçon, l'unité de commande 12 utilise les positions passées de l'information (et la fiabilité de ces positions) pour estimer le trajet le plus probable effectué par l'information. Le modèle HMM attribut une probabilité à chaque tronçon de voie de circulation candidat, et une probabilité de transition associée au passage de l'information entre un tronçon candidat à l'instant à l'instant t-1 et un tronçon candidat à l'instant t. En pratique, le modèle HMM calcule la probabilité que l'information reçue se trouve effectivement sur le tronçon, en fonction ;

- d'une distance (euclidienne ou basée sur un grand cercle), et
- de la probabilité de transition.

L'expression des probabilités de transition peut être trouvée dans la littérature et est connue en soi.

L'algorithme établit ainsi la meilleure séquence de tronçons candidats qui représente le mouvement de l'information.

Deux phénomènes, l'erreur probable et la fausse alerte, sont à minimiser pour obtenir la plus grande confiance possible dans le résultat obtenu.

On définit l'erreur probable p(erreur_i) comme la probabilité que la position absolue Zi de l'information ne soit pas positionnée sur le bon tronçon de voie de circulation Rk,i par l'algorithme alors qu'il provient en réalité dudit tronçon Rk,i. Mathématiquement, l'erreur probable s'énonce de la manière suivante.

[Math. 6]

$$p(erreur_i) = p(\overline{R_i}|X_i \in R_i)$$

On définit une fausse alerte Pfausse comme la probabilité que la position absolue Zi de l'information reçue soit associée par l'algorithme au tronçon de voie de circulation Ri alors qu'il provient en réalité d'un autre tronçon de voie de circulation Rk,i. Mathématiquement, la fausse alerte s'énonce de la manière suivante.

[Math 7]

$$p_{Fausse} = p\big(r_{k,i} \,|x_i \notin r_{k,i}\big)$$

A l'étape du bloc J4, l'unité de commande 12 met en œuvre une série de calculs pour estimer la fiabilité du résultat issu de l'algorithme.

L'estimation de la fiabilité indique la confiance de l'algorithme sur le fait qu'il a associé l'information avec le bon tronçon de voie de circulation.

La fiabilité L(Ri) est mesurée selon l'équation suivante.

[Math 8]

$$L\big(R_{k,i}\big) = \log\frac{Prob\big(R_{k,i}|Z\big)}{E_{\{j \neq k\}}[Prob\big(R_{j,i}|Z\big)]}$$

Plus la fiabilité L(Rk,i) est élevée, plus les chances d'avoir trouvé, à l'issue de l'algorithme, le meilleur candidat parmi les tronçons de voie de circulation possibles Rk,i sont grandes. Ainsi, le meilleur tronçon candidat Rk,i est celui associé à la plus grande fiabilité L(Rk,i).

Dans une étape suivante, représentée par le bloc J6 sur la figure 3, l'unité de commande détermine la position estimée Xi de la i-ème information reçue à l'instant t, dans la cartographie. Pour ce faire, connaissant le tronçon de voie de circulation Ri d'où provient l'information (ce tronçon ayant été élu parmi tous les tronçon Rk,i), l'unité de commande 12 projette orthogonalement la position absolue Zi sur le tronçon Ri.

Dans une dernière étape, qui est identique à celle détaillée dans le cadre de la procédure de localisation simplifiée, l'unité de commande 12 estime s'il faut implémenter dans l'unité de mémoire 11 les nouvelles « données » obtenues pour l'information reçue à l'instant t, à savoir le tronçon de voie de circulation Ri(t) sur lequel est situé l'émetteur 100 de l'information, la fiabilité L(Ri(t)) de la détermination de ce tronçon et la position estimée Xi(t) de l'information sur le tronçon (bloc A2 de la figure 3).

Grâce à l'étape a) du procédé, les informations sont localisées avec une plus grande précision et à moindre coût.

A l'étape c), le procédé selon l'invention combine les résultats des étapes a) et b). Ainsi, toutes les informations reçues ayant été localisées sur la cartographie à l'étape a), et le filtre spatial associé à chaque système embarqué 20, 21, 22 étant connu de l'étape b), l'unité de commande 12 vérifie quelles informations reçues sont situées sur des tronçons de voie de circulation situés à l'intérieur du filtre spatial afin d'envoyer seulement ces informations vers le système embarqué 20, 21, 22.

Si l'information reçue est située sur un tronçon de voie circulation situé en dehors du filtre spatial, elle n'est pas transmise au système embarqué 20, 21, 22. Au contraire, si l'information reçue est située sur un tronçon de voie de circulation localisé dans le filtre spatial, cette information est transmise au système embarqué 20, 21, 22 qui sera en mesure de la traiter.

La figure 4 donne un exemple de cartographie sur laquelle on a représenté l'ensemble des informations reçues par le dispositif 10. Le véhicule 1 est situé au niveau de la croix. Les informations sont représentées par des cercles vides, des cercles pleins ou des cercles remplis avec un astérisque. En pratique, seules les informations représentées par les cercles vides sont ici transmises à un des systèmes embarqués 20, 21, 22, les informations représentées par les cercles pleins étant situées sur des voies de circulation qui ne recoupent jamais la voie de circulation de l'itinéraire le plus probable emprunté par le véhicule, tandis que les informations représentées par les cercles remplis d'un astérisque sont situées trop loin du véhicule pour intéresser le système embarqué 20, 21, 22.

La présente invention n'est nullement limitée aux modes de réalisation décrits et représentés, mais l'homme du métier saura y apporter toute variante conforme à l'invention, en tenant compte du fait que la couverture de l'invention est uniquement définie par les revendications annexées.

Il est notamment envisageable que le véhicule 1 comporte une unité de traitement adaptée à trier les informations reçues de la part des émetteurs 100 en fonction de leur nature et/ou du type d'émetteurs 100 les émettant. Par exemple, l'unité de traitement est placée en amont du dispositif selon l'invention, de sorte que le dispositif selon l'invention ne reçoit que les informations dont la nature est susceptible d'intéresser au moins un des systèmes embarqués du véhicule 1. Si le dispositif selon l'invention est disposé en amont de l'unité de traitement, ce qui est tout à fait envisageable, le dispositif repère spatialement toutes les informations reçues avant qu'elles ne soient filtrées en fonction de leur nature ou de la nature de leur émetteur. La communication entre le filtre et le dispositif selon l'invention est de préférence une communication filaire.

Selon une autre variante envisageable, à l'étape c), les informations qui sont localisées sur des tronçons de voie de circulation situés hors du filtre spatial peuvent être transmises au système embarqué avec une indication qu'elles doivent être traitées de manière moins urgente que les autres informations, plutôt que de ne pas être transmises du tout au système embarqué. Ainsi, il est possible grâce à l'invention de classer les informations reçues par ordre de priorité et d'importance, en fonction de leur localisation sur la cartographie.

**Revendications**

1. Procédé de sélection d'informations parmi une pluralité d'informations reçues à un instant t de la part d'émetteurs (100) situés à distance d'un véhicule (1), en vue de la transmission des informations sélectionnées à au moins un système d'assistance à la conduite embarqué (20, 21, 22) dans le véhicule (1), selon lequel il est prévu de :

   a) estimer la position de chaque information reçue dans une cartographie de voies de circulation en fonction de la position absolue (Zi) de ladite information reçue à l'instant t,
   b) déterminer au moins un lieu d'intérêt dans lequel doivent être positionnées les informations que ledit au moins un système embarqué (20, 21, 22) souhaite se voir transmises en priorité,
   c) sélectionner, parmi les informations reçues, celles à transmettre au système embarqué, en fonction de leur position estimée (Xi) sur la cartographie établie à l'étape a) et du lieu d'intérêt renseigné à l'étape b),

   **caractérisé en ce que**, à l'étape a), la position de chaque information reçue à l'instant t est estimée dans la cartographie à l'aide d'une procédure de localisation choisie parmi une procédure simplifiée à exécution rapide, qui est adaptée aux informations statiques, ou une procédure complexe à exécution plus lente, qui est adaptée à la localisation d'informations dynamiques, laquelle procédure de localisation étant choisie en fonction d'une valeur de densité du réseau de voies de circulation le long de l'itinéraire emprunté.

2. Procédé selon la revendication 1, selon lequel le choix de la procédure de localisation est en outre opéré en fonction de l'erreur statistique associée à la position absolue (Zi) de l'information reçue à l'instant t.

3. Procédé selon l'une des revendications 1 et 2, selon lequel la procédure de localisation simplifiée comprend une projection orthogonale de la position absolue de l'information reçue dans chaque voie de circulation, et la sélection de la projection orthogonale la plus courte pour positionner l'information reçue dans la cartographie.

4. Procédé selon l'une des revendications 1 à 3, selon lequel, la procédure de localisation complexe détermine la voie de circulation (Ri) sur laquelle il convient de projeter la position absolue (Zi) de l'information reçue à l'instant t, à partir, d'une part, d'une zone de la cartographie plus ou moins étendue, et, d'autre part, d'un nombre plus ou moins grand de positions passées adoptées par l'information reçue aux instants précédant l'instant t.

5. Procédé selon la revendication 4, selon lequel la procédure de localisation complexe comporte une étape de paramétrage au cours de laquelle sont paramétrés la taille de la zone de la cartographie et le nombre de positions passées à considérer, en fonction de l'erreur statistique associée à la position absolue (Zi) de l'information reçue à l'instant t.

6. Procédé selon l'une des revendications 4 et 5 selon lequel la procédure de localisation complexe comporte en outre une étape d'initialisation, au cours de laquelle il est choisi, pour chacune des positions passées adoptées à un des instants précédant l'instant t, si ladite position à considérer est la position absolue (Zi(t-1)) ou la position estimée (Xi(t-1)) dans la cartographie de l'information reçue audit instant précédant l'instant t, le choix étant opéré en fonction de la fiabilité (L(Ri(t-1))) associée à la position estimée (Xi(t-1)).

7. Procédé selon l'une des revendications 1 à 6, selon lequel, à l'étape b), le lieu d'intérêt est délimité par un filtre spatial qui indique les portions de voies de circulation (Ri) à considérer en fonction, d'une part, de la position du véhicule à un instant t, et, d'autre part, d'un itinéraire de référence du véhicule à l'instant t.

8. Procédé selon la revendication 7, selon lequel, le filtre spatial comporte un sous-ensemble de segments (idx) de voies de circulation et de nœuds.

9. Procédé selon la revendication 7, selon lequel, le filtre spatial comporte :

   - une position de référence dans la cartographie,
   - une distance maximale dans l'itinéraire de référence du véhicule, mesurée à partir de la position de référence,
   - le degré de voies de circulations adjacentes à considérer, et,
   - éventuellement, une distance maximale, dans les voies de circulations adjacentes, mesurée à partir de la position de référence.

10. Dispositif (10) de sélection d'informations parmi une pluralité d'informations reçues à un instant t de la part d'émetteurs (100) situés à distance d'un véhicule (1), en vue de la transmission des informations sélectionnées à un système d'assistance à la conduite embarqué (20, 21, 22) dans le véhicule, comportant :

    - une unité de mémoire (11) adaptée à stocker une cartographie des voies de circulation, au moins un lieu d'intérêt dans lequel doivent être positionnées les informations à transmettre en priorité au système embarqué (20, 21, 22), ainsi que la position absolue (Zi) de l'information reçue à l'instant t,
    - une unité de commande (12) adaptée à estimer la position de chaque information reçue dans la cartographie et à sélectionner les informations reçues à transmettre en priorité au système embarqué (20, 21, 22) en fonction de la position estimée desdites informations reçues, dans la cartographie, et du lieu d'intérêt stocké dans l'unité de mémoire (11),

    ladite unité de commande (12) étant adaptée à estimer la position de chaque information reçue, dans la cartographie, à l'aide d'une procédure de localisation choisie parmi une procédure simolifiée à exécution rapide, qui est adaptée aux informations statiques, ou une procédure complexe à exécution plus lente, qui est adaptée à la localisation d'informations dynamiques, laquelle procédure de localisation est choisie en fonction d'une valeur de densité du réseau de voies de circulation le long de l'itinéraire emprunté.

**Patentansprüche**

1. Verfahren zum Auswählen von Informationen aus mehreren Informationen, die zu einem Zeitpunkt t von Sendern (100) empfangen werden, die in einem Abstand von einem Fahrzeug (1) liegen, zur Übertragung der ausgewählten Informationen zu mindestens einem Fahrassistenzsystem (20, 21, 22), das sich an Bord des Fahrzeugs (1) befindet, wobei vorgesehen ist:

    a) die Position jeder empfangenen Information in einer Kartierung von Fahrspuren in Abhängigkeit von der Absolutposition (Zi) der zum Zeitpunkt t empfangenen Information abzuschätzen,
    b) mindestens einen interessanten Ort zu bestimmen, an dem die Informationen positioniert werden müssen, von denen das mindestens eine Bordsystem (20, 21, 22) wünscht, sie vorrangig übertragen zu bekommen,
    c) aus den empfangenen Informationen jene, die zum Bordsystem zu übertragen sind, in Abhängigkeit von ihrer abgeschätzten Position (Xi) in der in Schritt a) erstellten Kartierung und dem in Schritt b) vermerkten interessanten Ort auszuwählen,

    **dadurch gekennzeichnet, dass** in Schritt a) die Position jeder zum Zeitpunkt t empfangenen Information in der Kartierung mit Hilfe einer Lokalisierungsprozedur abgeschätzt wird, die aus einer vereinfachten Prozedur mit schneller Ausführung, die an die statischen Informationen angepasst ist, oder einer komplexen Prozedur mit langsamerer Ausführung, die an die Lokalisierung von dynamischen Informationen angepasst ist, gewählt wird, wobei die Lokalisierungsprozedur in Abhängigkeit von einem Dichtewert des Fahrspurnetzes entlang der benutzten Route gewählt wird.

2. Verfahren nach Anspruch 1, wobei die Wahl der Lokalisierungsprozedur außerdem in Abhängigkeit vom statistischen Fehler durchgeführt wird, der der Absolutposition (Zi) der zum Zeitpunkt t empfangenen Information zugeordnet ist.

3. Verfahren nach einem der Ansprüche 1 und 2, wobei die vereinfachte Lokalisierungsprozedur eine orthogonale Projektion der Absolutposition der empfangenen Information in jeder Fahrspur und die Auswahl der kürzesten orthogonalen Projektion zum Positionieren der empfangenen Information in der Kartierung umfasst.

4. Verfahren nach einem der Ansprüche 1 bis 3, wobei die komplexe Lokalisierungsprozedur die Fahrspur (Ri), auf die es ratsam ist, die Absolutposition (Zi) der zum Zeitpunkt t empfangenen Information zu projizieren, anhand einerseits einer mehr oder weniger ausgedehnten Zone der Kartierung und andererseits einer mehr oder weniger großen Anzahl von passierten Positionen, die durch die Information eingenommen werden, die zu den Zeitpunkten, die dem Zeitpunkt t vorangehen, empfangen wird, bestimmt.

5. Verfahren nach Anspruch 4, wobei die komplexe Lokalisierungsprozedur einen Schritt zur Parametrisierung umfasst, in dessen Verlauf die Größe der Zone der Kartierung und die Anzahl von zu berücksichtigenden passierten Positionen in Abhängigkeit vom statistischen Fehler, der der Absolutposition (Zi) der zum Zeitpunkt t empfangenen Information zugeordnet ist, parametrisiert werden.

6. Verfahren nach einem der Ansprüche 4 und 5, wobei die komplexe Lokalisierungsprozedur außerdem einen Initialisierungsschritt umfasst, in dessen Verlauf für jede der passierten Positionen, die zu einem der Zeitpunkte eingenommen werden, die dem Zeitpunkt t vorangehen, gewählt wird, ob die zu berücksichtigende Position die Absolutposition (Zi(t-1)) oder die abgeschätzte Position (Xi(t-1)) in der Kartierung der empfangenen Information zu dem Zeitpunkt, der dem Zeitpunkt t vorangeht, ist, wobei die Wahl in Abhängigkeit von der Zuverlässigkeit (L(Ri(t-1))), die der abgeschätzten Position (Xi(t-1)) zugeordnet ist, durchgeführt wird.

7. Verfahren nach einem der Ansprüche 1 bis 6, wobei in Schritt b) der interessante Ort durch ein räumliches Filter eingegrenzt wird, das die zu berücksichtigenden Abschnitte von Fahrspuren (Ri) in Abhängigkeit von einerseits der Position des Fahrzeugs zu einem Zeitpunkt t und andererseits einer Referenzroute des Fahrzeugs zum Zeitpunkt t angibt.

8. Verfahren nach Anspruch 7, wobei das räumliche Filter eine Teilmenge von Segmenten (idx) von Fahrspuren und von Knoten umfasst.

9. Verfahren nach Anspruch 7, wobei das räumliche Filter Folgendes umfasst:

    - eine Referenzposition in der Kartierung,

- einen maximalen Abstand in der Referenzroute des Fahrzeugs, der von der Referenzposition aus gemessen wird,
- den Grad von zu berücksichtigenden benachbarten Fahrspuren, und
- eventuell einen maximalen Abstand in den benachbarten Fahrspuren, der von der Referenzposition aus gemessen wird.

10. Vorrichtung (10) zum Auswählen von Informationen aus mehreren Informationen, die zu einem Zeitpunkt t von Sendern (100) empfangen werden, die in einem Abstand von einem Fahrzeug (1) liegen, zur Übertragung der ausgewählten Informationen zu einem Fahrassistenzsystem (20, 21, 22), das sich an Bord des Fahrzeugs befindet, die Folgendes umfasst:

- eine Speichereinheit (11), die dazu ausgelegt ist, eine Kartierung der Fahrspuren, mindestens einen interessanten Ort, an dem die vorrangig zum Bordsystem (20, 21, 22) zu übertragenden Informationen positioniert werden müssen, sowie die Absolutposition (Zi) der zum Zeitpunkt t empfangenen Information zu speichern,
- eine Steuereinheit (12), die dazu ausgelegt ist, die Position jeder empfangenen Information in der Kartierung abzuschätzen und die vorrangig zum Bordsystem (20, 21, 22) zu übertragenden empfangenen Informationen in Abhängigkeit von der abgeschätzten Position der empfangenen Informationen in der Kartierung und dem in der Speichereinheit (11) gespeicherten interessanten Ort auszuwählen,

wobei die Steuereinheit (12) dazu ausgelegt ist, die Position jeder empfangenen Information in der Kartierung mit Hilfe einer Lokalisierungsprozedur abzuschätzen, die aus einer vereinfachten Prozedur mit schneller Ausführung, die an die statischen Informationen angepasst ist, oder einer komplexen Prozedur mit langsamerer Ausführung, die an die Lokalisierung von dynamischen Informationen angepasst ist, gewählt wird, wobei die Lokalisierungsprozedur in Abhängigkeit von einem Dichtewert des Netzes von Fahrspuren entlang der benutzten Route gewählt wird.

## Claims

1. Method for selecting information items from among a plurality of information items received at a time t from senders (100) located at distance from a vehicle (1), with a view to transmitting the selected information items to at least one driver assistance system (20, 21, 22) located on board the vehicle (1), in which provision is made to:

   a) estimate the position of each received information item in a traffic-lane map depending on the absolute position (Zi) of said information item received at the time t,
   b) determine at least one place of interest in which the information items that said at least one on-board system (20, 21, 22) wishes to see transmitted as a priority must be positioned,
   c) select, from among the received information items, those to be transmitted to the on-board system, depending on their estimated position (Xi) on the map established in step a) and on the place of interest determined in step b),

   **characterized in that**, in step a), the position of each information item received at the time t is estimated in the map using a location procedure chosen from among a simplified procedure with rapid execution, which is suitable for static information items, or a complex procedure with slower execution, which is suitable for location of dynamic information items, the location procedure being chosen depending on a density value of the network of traffic lanes along the route taken.

2. Method according to Claim 1, wherein the choice of the location procedure is further made depending on the statistical error associated with the absolute position (Zi) of the information item received at the time t.

3. Method according to one of Claims 1 and 2, wherein the simplified location procedure comprises an orthogonal projection of the absolute position of the received information item into each traffic lane, and selection of the shortest orthogonal projection to position the received information item in the map.

4. Method according to one of Claims 1 to 3, wherein the complex location procedure determines the traffic lane (Ri) into which it is appropriate to project the absolute position (Zi) of the information item received at the time t, on the basis, on the one hand, of a relatively extensive region of the map, and, on the other hand, of a relatively high number of past positions adopted by the information item received at times preceding the time t.

5. Method according to Claim 4, wherein the complex location procedure comprises a parametrizing step during which are parametrized the size of the region of the map and the number of past positions to be considered, depending on the statistical error associated with the absolute position (Zi) of the information item received at the time t.

6. Method according to one of Claims 4 and 5, wherein the complex location procedure further comprises an initializing step, during which it is chosen, for each of the past positions adopted at one of the times preceding the time t, whether said position to be considered is the absolute position (Zi(t-1)) or the estimated position (Xi(t-1)) in the map of the information item received at said time preceding the time t, the choice being made depending on the reliability (L(Ri(t-1))) associated with the estimated position (Xi(t-1)).

7. Method according to one of Claims 1 to 6, wherein, in step b), the place of interest is delineated by a spatial filter which indicates the traffic-lane portions (Ri) to be considered depending, on the one hand, on the position of the vehicle at a time t, and, on the other hand, on a reference route of the vehicle at the time t.

8. Method according to Claim 7, wherein the spatial filter comprises a subset of traffic-lane segments (idx) and of nodes.

9. Method according to Claim 7, wherein the spatial filter comprises:

   - a reference position in the map,
   - a maximum distance on the reference route of the vehicle, measured from the reference position,
   - the degree of adjacent traffic lanes to be considered, and
   - possibly, a maximum distance, in the adjacent traffic lanes, measured from the reference position.

10. Device (10) for selecting information items from among a plurality of information items received at a time t from senders (100) located at distance from a vehicle (1), with a view to transmitting the selected information items to a driver assistance system (20, 21, 22) located on board the vehicle, comprising:

   - a memory unit (11) configured to store a map of traffic lanes, at least one place of interest in which the information items to be transmitted as a priority to the on-board system (20, 21, 22) must be positioned, and the absolute position (Zi) of the information item received at the time t,
   - a control unit (12) configured to estimate the position of each received information item in the map and to select the received information items to be transmitted as a priority to the on-board system (20, 21, 22) depending on the estimated position of said received information items, in the map, and on the place of interest stored in the memory unit (11),

   said control unit (12) being configured to estimate the position of each received information item, in the map, using a location procedure chosen from among a simplified procedure with rapid execution, which is suitable for static information items, or a complex procedure with slower execution, which is suitable for location of dynamic information items, the location procedure being chosen depending on a density value of the network of traffic lanes along the route taken.

# Fig.1

# Fig.2

# Fig.3

A1

i)

j) J1

M,C

11

$R_i$,$L(R_i)$,
$X_i$

J2

J3

I1

$||Z_i(t)-Z_i(t-1)||^2<Th_1?$

$R_{k,i}$

J5

$R_i(t)=R_i(t-1)$
$X_i(t)=X_i(t-1)$
$L(R_i(t))=L(R_i(t-1))$

J4

$R_i$,$L(R_i)$

I2

$d(Z_i,R_{k,i})$

$X_i$

J6

$R_i$,$X_i$,$L(R_i)$

I3

$L(R_i)>Th_2?$

A2

# Fig.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3428028 A1